# EUROPEAN PATENT APPLICATION

(11) **EP 2 157 792 A1**
(43) Date of publication of application: **24.02.2010**
(21) Application number: 08253071.8
(22) Date of filing: 18.09.2008
(51) Int. Cl.: H04N 7/16, H04L 29/06, H04H 20/42

(54) **User group assignment method for key management**

(30) Priority: 22.08.2008 US 196557
(71) Applicant: Industrial Technology Research Institute, Hsinchu Chutung 31040 (CN)
(72) Inventor: Wang, King-Hang, 31040 Taiwan (CN); Chao, Yung-Hsuan, 31040 Taiwan (CN); Sun, Hung-Min, 31040 Taiwan (CN); Kao, Yih-Sien, 31040 Taiwan (CN); Wu, Wan-Shan, 31040 Taiwan (CN)
(74) Representative: Roberts, Mark Peter

(57) **Abstract**

A method for assigning a plurality of users of a broadcasting system, wherein each of the plurality of users subscribes to at least one of a plurality of receiver groups provided by the broadcasting system. The method includes dividing the plurality of users into a plurality of temporary groups each including ones of the plurality of users that subscribe to a same one of the plurality of receiver groups; and assigning the ones of the plurality of users to at least one user group.

## Description

### Field of the Invention

This invention pertains in general to user group assignment methods for key management in broadcasting systems.

### Background of the Invention

A broadcasting system may be a conditional access system, which broadcasts digital media to subscribers or users who have access rights. For example, a broadcasting system for digital pay-TV enables a service provider to offer various pay services, based on a service packaging method, for video and audio data transmitted via satellite or cable. The video and audio data are usually encrypted with keys. A user/subscriber needs the keys associated with his/her subscribed service to decrypt the video and audio data.

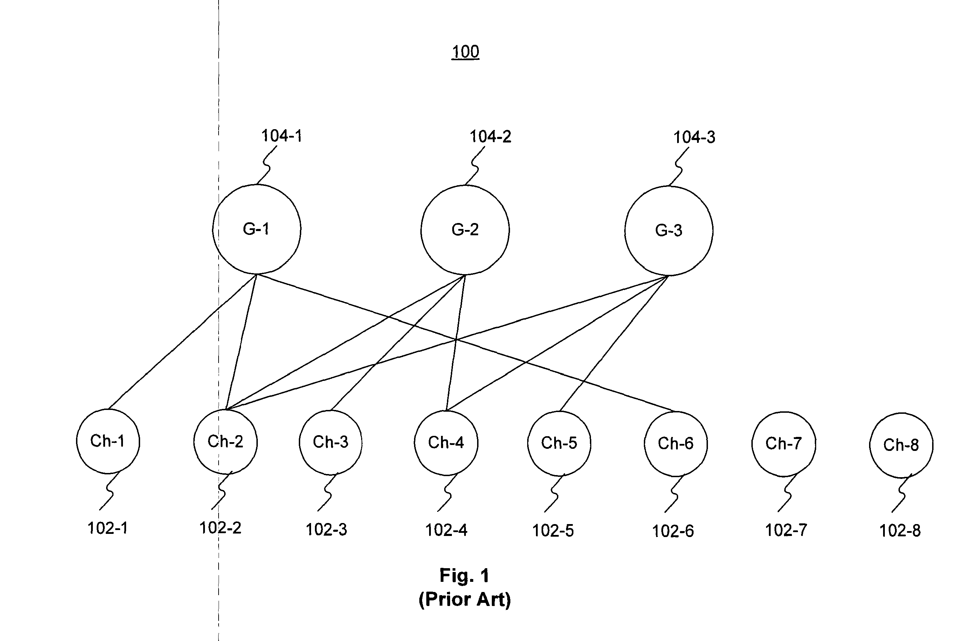

Fig. 1 illustrates a conventional service packaging method 100 performed by the broadcasting system. Typically, the broadcasting system provides a plurality of channels of data/content. For example, in Fig. 1, the broadcasting system provides eight channels Ch-1 102-1, Ch-2 102-2, ..., Ch-8 102-8 of data/content. Each of the channels Ch-1 102-1, Ch-2 102-2, ..., Ch-8 102-8 may be defined as an independent resource.

Based on the service packaging method, the broadcasting system may further provide a plurality of channel packages such as first, second, and third channel packages G-1 104-1, G-2 104-2, and G-3 104-3, in addition to providing the channels Ch-1 102-1, Ch-2 102-2, ... , Ch-8 102-8. For example, the first channel package G-1 104-1 may include the channels Ch-1 102-1, Ch-2 102-2, and Ch-6 102-6, the second channel package G-2 104-2 may include the channels Ch-2 102-2, Ch-3 102-3, and Ch-4 102-4, and the third channel package G-3 104-3 may include the channels Ch-2 102-2, Ch-4 102-4, and Ch-5 102-5. Each of the channel packages G-1 104-1, G-2 104-2, and G-3 104-3 may be defined as a resource group.

Each of the channels Ch-1 102-1, Ch-2 102-2, ..., Ch-8 102-8 and the channel packages G-1 104-1, G-2 104-2, and G-3 104-3 may be further defined as a receiver group. Therefore, in Fig. 1, there are eleven receiver groups including eight channels Ch-1 102-1, Ch-2 102-2, ..., Ch-8 102-8 and three channel packages G-1 104-1, G-2 104-2, and G-3 104-3. A user/subscriber may subscribe to one or ones of the receiver groups. For example, if the user is interested in content of the channels Ch-1 102-1, Ch-2 102-2, Ch-3 102-3, and Ch-6 102-6, the user may subscribe to first and second receiver groups corresponding to the channel Ch-3 104-3 and the channel package G-1 104-1, respectively.

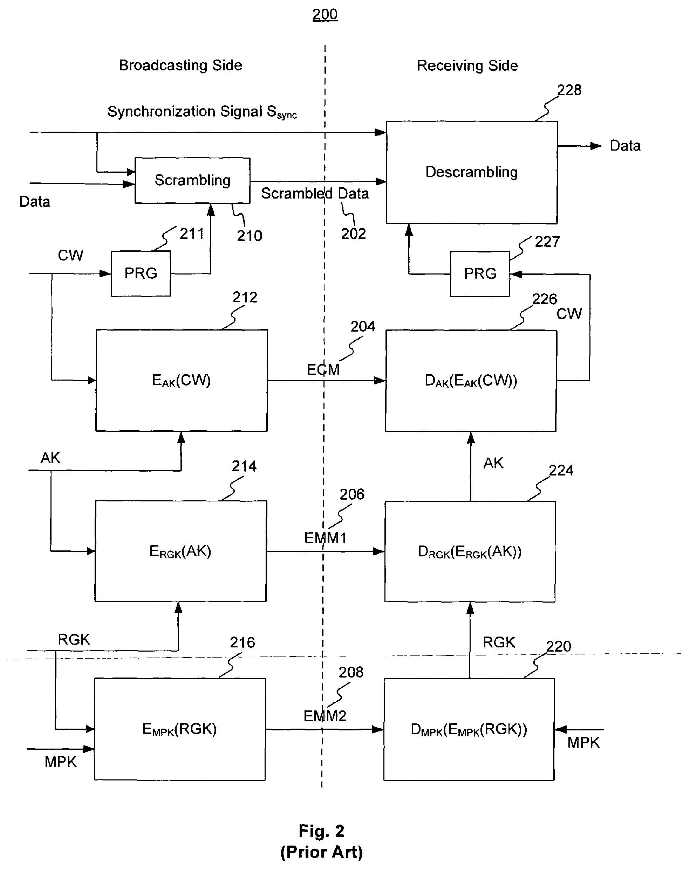

Fig. 2 illustrates a conventional broadcasting method 200. Based on the conventional broadcasting method 200, a broadcasting system may broadcast scrambled data 202, an entitlement control message (ECM) 204, a first entitlement management message (EMM1) 206, and a second entitlement management message (EMM2) 208 from a broadcasting side, i.e., the broadcasting system, to a receiving side, i.e., a subscriber/user.

On the broadcasting side, a channel of original data, e.g., digital media data, is encrypted or scrambled with a random signal based on a synchronization signal S_{sync} (step 210), and the scrambled data 202 is broadcasted. The random signal is generated by a first pseudorandom generator (PRG) based on a control word (CW) (step 211). The CW is encrypted with an authorization key (AK) corresponding to the channel (step 212), and the encrypted CW is broadcasted in the ECM message 204. Typically, each independent resource, such as a channel of data/content, may have an AK. The AK is encrypted with a receiver group key (RGK) corresponding to a receiver group including the channel (step 214), and the encrypted AK is broadcasted in the EMM1 message 206. Typically, each receiver group may have an RGK. The RGK is encrypted with a master private key (MPK) (step 216), and the encrypted RGK is broadcasted in the EMM2 message 206. Typically, each user may have or be provided with the MPK.

On the receiving side, the received EMM2 message 208 is decrypted with the MPK to retrieve the RGK (step 220). For example, the MPK may be stored in a smart card provided to the user. The received EMM1 message 206 is then decrypted with the retrieved RGK to retrieve the AK (step 224), and the received ECM message 204 is decrypted with the retrieved AK to retrieve the CW (step 226). The retrieved CW is further inputted to a second pseudorandom generator (PRG) to generate the random signal (step 227), which is used to descramble the received scrambled data 202 to obtain the original data based on the synchronization signal S_{sync} (step 228).

A conventional user group assignment method may be used to reduce a data amount of EMM2 messages broadcasted to a plurality of users/subscribers. In accordance with the conventional user group assignment method, the users are randomly assigned to user groups, and the users in the same user group may receive the same EMM2 message.

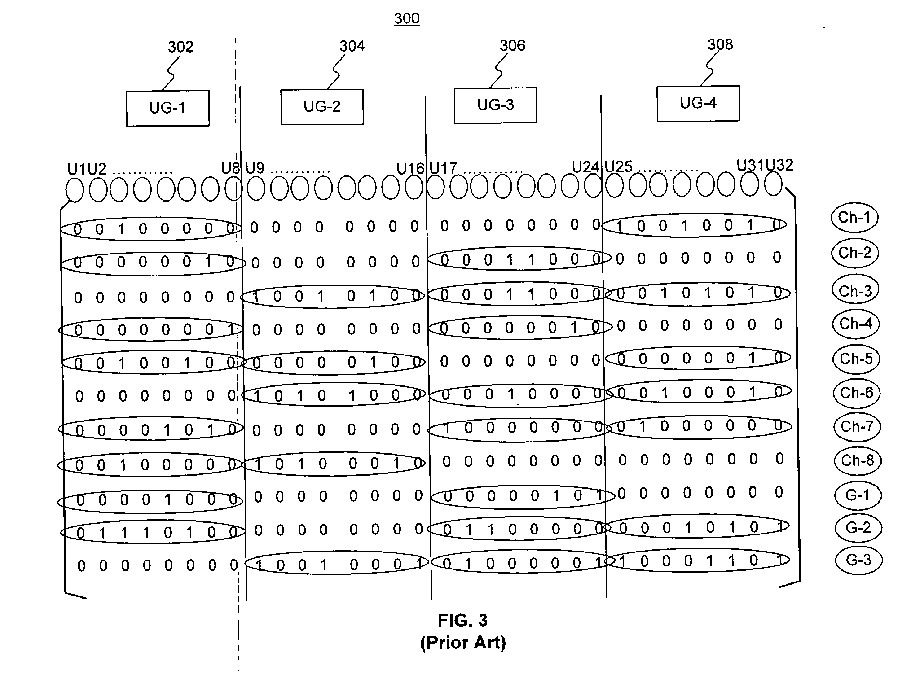

Fig. 3 illustrates a conventional user group assignment method 300 performed by a broadcasting system. For example, the broadcasting system provides the eleven receiver groups Ch-1, Ch-2, ... , Ch-8, G-1, G-2, and G-3, shown in Fig. 1. Also for example, there are a total of thirty-two users/subscribers Ui (i = 1, 2, ..., 32). Each small circle "O" in Fig. 3 represents a space for a user. Each space is occupied by one of the thirty-two users Ui (i = 1, 2, ..., 32).

Referring to Fig. 3, the users Ui (i = 1, 2, ..., 32) are randomly assigned to four user groups UG-1 302, UG-2 304, UG-3 306, and UG-4 308. For example, the users U1, U2, ..., U8 are in the first user group UG-1 302; the users U9, U10, ..., U16 are in the second user group UG-2 304; the users U17, U18, ..., U24 are in the third user group UG-3 306; and the users U25, U26, ..., U32 are in the fourth user group UG-4 308.

In Fig. 3, each value 0 or 1 corresponds to one of the users Ui (i = 1, 2, ..., 32) and one of the receiver groups, i.e., the channels Ch-1, Ch-2, ... Ch-8 and the channel packages G-1, G-2, and G-3. The value 0 indicates the user Ui does not subscribe to the one of the receiver groups. The value 1 indicates the user Ui subscribes to the one of the receiver groups. For example, the user U2 subscribes to the channel package G-2. Also for example, the user U3 subscribes to the channels Ch-1, Ch-5, Ch-8 and the channel package G-2. Without using the conventional user group assignment method, the broadcasting system would broadcast a total of fifty-six EMM2 messages corresponding to the fifty-six 1s in Fig. 3, respectively.

Consistent with the conventional user group assignment method 300, for each one of the receiver groups, the broadcasting system periodically, e.g., every month, broadcasts an EMM2 message to each one of the user groups UG-1 302, UG-2 304, UG-3 306, UG-4 308 that subscribes to the one of the receiver groups, to update the RGK corresponding to the one of the receiver groups. For example, for channel Ch-1, the broadcasting system broadcasts an EMM2 message to each of the user groups UG-1 and UG-4. Also for example, for the channel package G-1, the broadcasting system broadcasts an EMM2 message to each of the user groups UG-1 and UG-3. In Fig. 3, each large circle represents one of the user groups UG-1 302, UG-2 304, UG-3 306, UG-4 308 subscribing to one of the receiver groups. As a result, the broadcasting system broadcasts a total of twenty-eight EMM2 messages corresponding to the twenty-eight large circles in Fig. 3, respectively.

### SUMMARY OF THE INVENTION

The features of the invention are defined in the claims. However, where a claim contains multiple features, it must be understood that any one of those features may be applied independently of the others. Accordingly, no assumption is to be drawn that the claims define strict combinations of features that must be grouped together for technical reasons.

In accordance with the invention, there is provided a method for assigning a plurality of users of a broadcasting system, wherein each of the plurality of users subscribes to at least one of a plurality of receiver groups provided by the broadcasting system, the method comprising: dividing the plurality of users into a plurality of temporary groups each including ones of the plurality of users that subscribe to a same one of the plurality of receiver groups; and assigning the ones of the plurality of users to at least one user group.

Also in accordance with the invention, there is provided a method for assigning a plurality of users of a broadcasting system, wherein each of the plurality of users subscribes to at least one of a plurality of channels or one of a plurality of channel packages each including ones of the plurality of channels, the method comprising: dividing the plurality of users into a plurality of temporary groups, each of the plurality of temporary groups including ones of the plurality of users that subscribe to a same one of the plurality of channels or a same one of the plurality of channel packages; and assigning the ones of the plurality of users to at least one user group.

Further in accordance with the invention, there is provided a method for adding a new user to a plurality of users of a broadcasting system, wherein each of the plurality of users subscribes to at least one of a plurality of channels or one of a plurality of channel packages each including ones of the plurality of channels, and each of the plurality of users is assigned to one of a plurality of user groups, the method comprising: assigning the new user to one of the plurality of user groups, the new user and at least one previously assigned user in the one of the plurality of user groups subscribing to the same one of the plurality of channels and channel packages.

Further in accordance with the invention, there is provided a method for removing a first user from a plurality of users of a broadcasting system, wherein each of the plurality of users subscribes to at least one of a plurality of channels or one of a plurality of channel packages each including ones of the plurality of channels, and each of the plurality of users is assigned to one of a plurality of user groups, the method comprising: reserving, when the first user un-subscribes from one of the plurality of channels and channel packages, a space in the user group where the first user was assigned, and assigning the first user to the user group if the first user re subscribes to the one of the plurality of channels and channel packages.

Further in accordance with the invention, there is provided a method for managing a plurality of user groups of a broadcasting system, wherein each of the plurality of user groups includes a plurality of users subscribing to at least one of a plurality of channels or one of a plurality of channel packages each including ones of the plurality of channels, and each of the plurality of users is assigned to one of the plurality of user groups, the method comprising: merging first and second ones of the plurality of user groups, wherein a total number of the users in the first user group and the users in the second user group is not larger than a maximum allowable user number.

Further in accordance with the invention, there is provided a broadcasting system for providing a plurality of receiver groups to a plurality of users, the system being configured to: divide the plurality of users into a plurality of temporary groups each including ones of the plurality of users that subscribe to a same one of the receiver groups; and assign the ones of the plurality of users to at least one user group.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments of the invention and, together with the description, serve to explain the principles of the invention.

Fig. 1 illustrates a conventional service packaging method performed by a broadcasting system.

Fig. 2 illustrates a conventional broadcasting method.

Fig. 3 illustrates a conventional user group assignment method.

Fig. 4 illustrates a user group assignment method for key management, according to an exemplary embodiment.

Figs. 5A and 5B illustrate a flow chart of an initialization phase of a user group assignment method, according to an exemplary embodiment.

Figs. 6A-6E illustrate an exemplary user group assignment method, according to an exemplary embodiment.

Fig. 7 illustrates an exemplary user group merger method, according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments consistent with the present invention do not represent all implementations consistent with the invention. Instead, they are merely examples of systems and methods consistent with aspects related to the invention as recited in the appended claims.

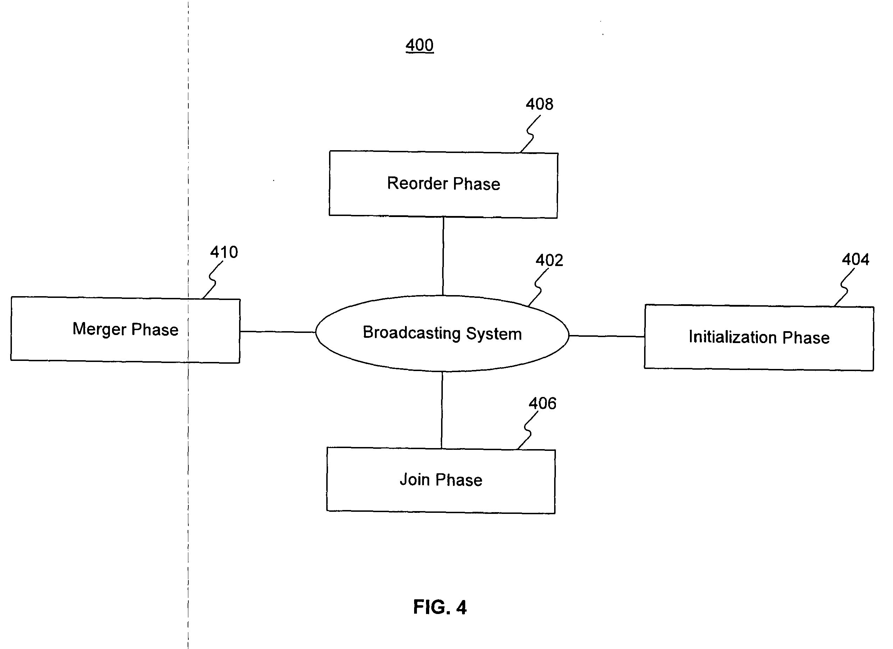

Fig. 4 illustrates a user group assignment method 400 for key management in a broadcasting system 402, according to an exemplary embodiment. For example, the broadcasting system 402 may be a digital broadcasting system or a pay-TV broadcasting system. The user group assignment method 400 may include an initialization phase 404, a join phase 406, a reorder phase 408, and a merger phase 410.

In exemplary embodiments consistent with the present invention, the broadcasting system 402 may have a plurality of users/subscribers. The broadcasting system 402 may provide N receiver groups including N1 channels Ch-1, Ch-2, ..., Ch-N1 of data/content, or N1 independent resources, and N2 channel packages G-1, G-2, ... G-N2, or N2 resource groups. Each of the channels of broadcasting data/content may be a TV program, a movie, etc. Each of the users may subscribe to one or ones of the receiver groups.

In exemplary embodiments consistent with the present invention, in the initialization phase 404, the broadcasting system 402 may assign the users into user groups, which will be described below. The broadcasting system 402 may divide the users into a plurality of temporary groups. Each of the temporary groups includes ones of the users that subscribe to a same one of the receiver groups. The users in each of the plurality of temporary groups are then assigned to one or ones of the user groups. In addition, a maximum allowable user number C may be set for each of the user groups. For example, each user group may have a maximum of 256 or 512 users.

In exemplary embodiments consistent with the present invention, when a new user subscribes to one or ones of the receiver groups, the broadcasting system 402 may enter the join phase 406. In the initialization phase 404, the broadcasting system 402 assigns the users into the user groups. In the join phase 406, the broadcasting system 402 assigns the new user to one of the user groups or a new user group, such that an increase in a data amount of EMM2 messages broadcasted by the broadcasting system 402 may be minimized. For example, the broadcasting system 402 may assign the new user to one of the user groups such that the new user and at least one user in the one of the user groups subscribe to the same one of the receiver groups.

In exemplary embodiments consistent with the present invention, when one of the users un-subscribes from one or ones of the receiver groups, the broadcasting system 402 may enter the reorder phase 408. In the reorder phase 408, the broadcasting system 402 temporarily, e.g., for 1-3 months, reserves a space in the user group where the un-subscribing one of the users was assigned. If that one of the users re-subscribes to the same one or ones of the receiver groups, the broadcasting system 402 may assign the re-subscribing one of the users to the user group where that same one of the users was previously assigned.

In exemplary embodiments consistent with the present invention, when ones of the user groups are small, that is, when a number of users in each of the ones of the user groups is not larger than a prescribed value, e.g., 50% of the maximum allowable user number C noted above, the broadcasting system 402 may enter the merger phase 410. In the merger phase 410, the broadcasting system 402 merges the ones of the user groups into one user group, which will be described below. For example, the broadcasting system 402 may merge first and second ones of the user groups, a total number of the users in the first user group and the users in the second user group being not larger than the maximum allowable user number C. Also for example, one of the users in the first user group and one of the users in the second user group may subscribe to the same one of the receiver groups.

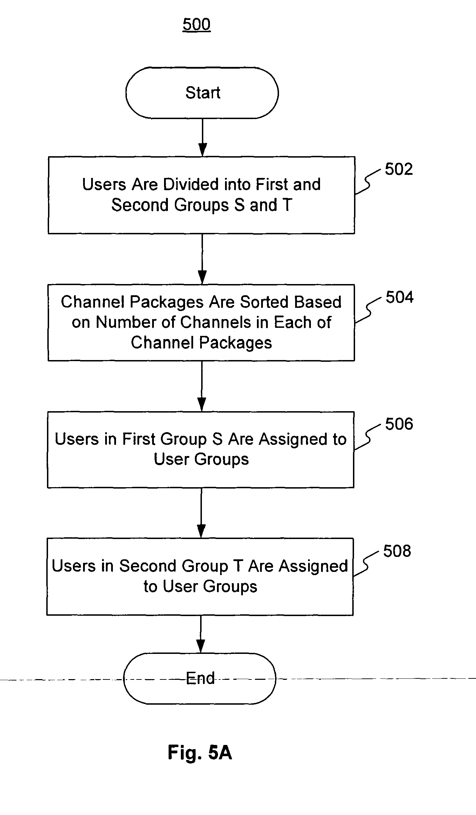

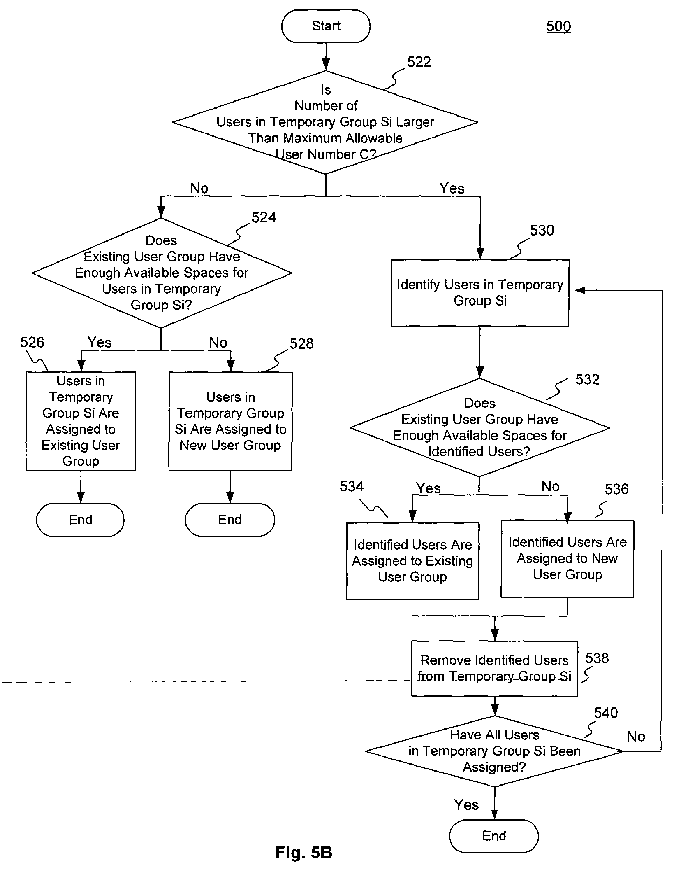

Figs. 5A and 5B illustrate a flow chart 500 of an initialization phase of the user group assignment method (Fig. 4), according to an exemplary embodiment. In the illustrated embodiment, the broadcasting system 402 (Fig. 4) provides N receiver groups including N1 channels Ch-1, Ch-2, ..., Ch-N1 of data/content, and N2 channel packages G-1, G-2, ... G-N2. The broadcasting system 402 has a plurality of users/subscribers. In addition, the maximum allowable user number C is set for each user group. Based on the disclosed user group assignment method, the broadcasting system 402 may divide the users into a plurality of temporary groups. Each of the temporary groups includes ones of the users that subscribe to the same one of the receiver groups. The users in each of the plurality of temporary groups are then assigned to one or more user groups, as more fully described below.

Referring to Fig. 5A, the users are divided into first and second groups S and T, respectively (step 502). The first group S includes ones of the users each subscribing to one or ones of the channel packages G-1, G-2, ..., G-N2. The second group T includes remaining ones of the users, i.e., the users only subscribing to one or ones of the channels Ch-1, Ch-2, ..., Ch-N1.

The channel packages G-1, G-2, ..., G-N2 are sorted based on a number of channels in each of the channel packages G-1, G-2, ..., G-N2, such that a first one of the sorted channel packages has a largest number of channels and a last one of the sorted channel packages has a smallest number of channels (step 504).

The users in the first group S are divided into temporary groups each corresponding to one of the channel packages G-1, G-2, ..., G-N2. For example, ones of the users subscribing to one of the channel packages G-1, G-2, ..., G-N2 are assigned to one of the temporary groups, starting from the first one of the sorted channel packages G-1, G-2, ... , G-N2. Also for example, one of the users may subscribe to more than one of the channel packages such as the channel packages G-1 and G-2. If the channel package G-1 has more channels than the channel package G-2, the one of the users would be only assigned to the temporary group corresponding to the channel package G-1. As a result, the users in the first group S are allocated among the temporary groups, such that each of the users in the first group S is in only one of the temporary groups.

The users in each of the temporary groups are further assigned to one or more user groups sequentially, e.g., based on the sorted channel packages (step 506). For example, for a first one of the temporary groups, S1, if a number of the users in the first temporary group S1 is not larger than the maximum allowable user number C, the users in the first temporary group S1 are assigned to a new user group. A user group is new if no user has previously been assigned to that user group. If the number of the users in the first temporary group S1 is larger than the maximum allowable user number C, the users in the first temporary group S1 are assigned to more than one new user group. When users in i-1 (i is an integer) of the temporary groups are assigned to user groups, which constitute existing user groups, users in a next one of the temporary groups, Si, may be assigned to one of the existing user groups or a new user group, in accordance with the steps shown in Fig. 5B.

Referring to Fig. 5B, a number of the users in the temporary group Si is compared to the maximum allowable user number C in a user group, to judge whether the number of the users in the temporary group Si is larger than, or not larger than, the maximum allowable user number C (step 522). If the number of the users in the temporary group Si is not larger than the maximum allowable user number C in a user group (step 522 - No), it is further judged whether one of the existing user groups has enough available spaces for the users in the temporary group Si (step 524). The one of the existing user groups already has at least one user, but may not have reached the maximum allowable user number C. If one of the existing user groups has enough available spaces for the users in the temporary group Si (step 524 - Yes), the users in the temporary group Si are assigned to the one of the existing user groups (step 526). For example, if the one of the existing user groups already has M users (M<C) and the temporary group Si has L users (L ≤ C-M), the users in the temporary group Si may be assigned to the one of the existing user groups.

If none of the existing user groups has enough available spaces for the users in the temporary group Si (step 524 - No), the users in the temporary group Si may be assigned to a new user group (step 528), since the number of the users in the temporary group Si is not larger than the maximum allowable user number C in a user group.

If the number of the users in the temporary group Si is larger than the maximum allowable user number C in a user group (step 522 - Yes), ones of the users in the temporary group Si are identified (step 530) in accordance with the following process. As noted above, each of the channels Ch-1, Ch-2, ..., Ch-N1 and the channel packages G-1, G-2, ... G-N2 may be further defined as a receiver group. For each one of the receiver groups, excluding the receiver group corresponding to the temporary group Si, referred to herein as the remaining receiver groups, the number of the users in the temporary group Si that also subscribe to the one of the remaining receiver groups is calculated. Thus, for each one of the remaining receive groups, the number of users in the temporary group Si that also subscribe to that remaining receiver group is calculated.

If a largest calculated number is smaller than the maximum allowable user number C, the users in the temporary group Si that also subscribe to the receiver group corresponding to the largest calculated number are the identified users. If the largest calculated number is still larger than the maximum allowable user number C, the users in the temporary group Si that also subscribe to the receive group corresponding to the largest calculated number may be considered a new temporary group, and the above calculation is again performed on the new temporary group. The calculation is repeated until a largest calculated user number is smaller than the maximum allowable user number C. The users in the temporary group Si that also subscribe to the receiver group corresponding to the largest one among the currently calculated user numbers are the identified users.

It is further judged whether one of the existing user groups has enough available spaces for the identified users in the temporary group Si (step 532). If one of the existing user groups has enough available spaces (step 532 - Yes), the identified users in the temporary group Si may be assigned to the one of the existing user groups (step 534). If none of the existing user groups has enough available spaces (step 532 - No), the identified users in the temporary group Si may be assigned to a new user group (step 536). The identified users are then removed from the temporary group Si (step 538). It is further judged that whether all the users in the temporary group Si have been assigned, and steps 530 - 540 are repeated until all the users in the temporary group Si are assigned to user groups.

Referring back to Fig. 5A, the users in the second group T are also divided into temporary groups each corresponding to one of the of the channels Ch-1, Ch-2, ..., Ch-N1, each of the users in the second group T being in only one of the temporary groups. The users in each of the temporary groups are further assigned to one or more user groups (step 508), similar to the description above, as shown in Fig. 5B.

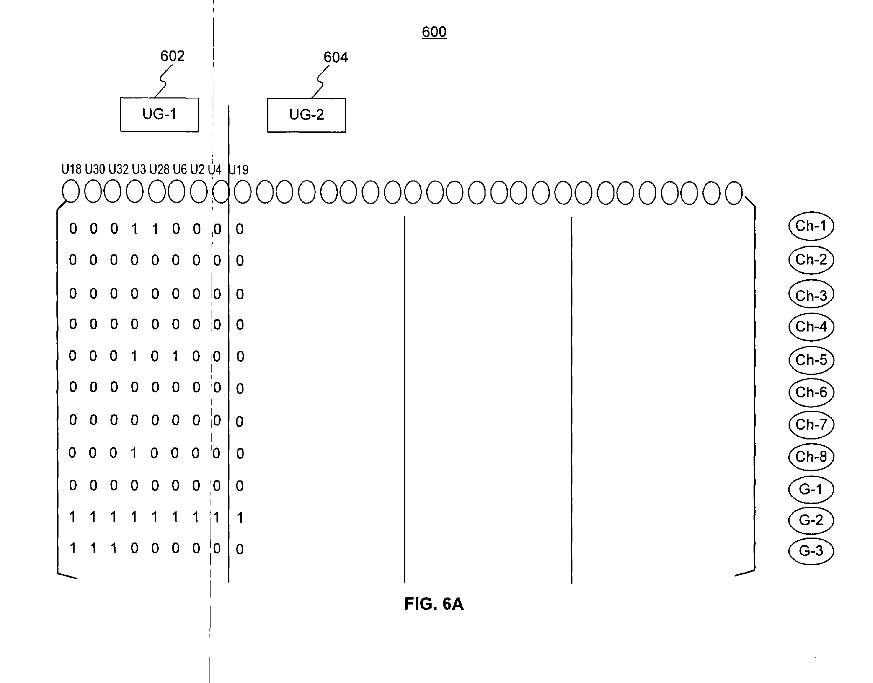

Figs. 6A-6E illustrate an exemplary user assignment method 600 based on the user group assignment method described above, according to an exemplary embodiment. For convenience of illustration and for comparison to the conventional user assignment method illustrated in Fig. 3, it is assumed the broadcasting system 402 (Fig. 4) assigns the thirty-two users Ui (i = 1, 2, ..., 32) in Fig. 3 to user groups, and a maximum allowable user number is set to be eight for each user group, i.e., C=8. In addition, it is assumed the broadcasting system 402 provides the eleven receiver groups including the three channel packages G-1, G-2, G-3 and the eight channels Ch-1, Ch-2, ..., Ch-8, illustrated in Fig. 1.

The users Ui (i = 1, 2, ..., 32) are divided into first and second groups S and T (Fig. 5A, step 502). The first group S includes ones of the users Ui (i = 1, 2, ..., 32) each subscribing to one or ones of the channel packages G-1, G-2, G-3. The second group T includes the remaining ones of the users, i.e., the users only subscribing to one or ones of the channels Ch-1, Ch-2, ... , Ch-8. For example, the user U2 subscribes to the channel package G-2 (Fig. 3), therefore the user U2 is in the first group S. Also for example, the user U5 subscribes to the channel package G-1 (Fig. 3), therefore the user U5 is also in the first group S. As another example, the user U31 does not subscribe to any of the channel packages G-1, G-2, and G-3, but subscribes the channels Ch-1, Ch-3, Ch-5, and Ch-6 (Fig. 3), therefore the user U31 is in the second group T.

The channel packages G-1, G-2, and G-3 are sorted based on a number of channels in each of the channel packages (Fig. 5A, step 504), such that a first one of the sorted channel packages has a largest number of channels and a last one of the sorted channel packages has a smallest number of channels. As noted above, the channel package G-1 includes the channels Ch-1, Ch-2, and Ch-6, the channel package G-2 includes the channels Ch-2, Ch-3, and Ch-4, and the channel package G-3 includes the channels Ch-2, Ch-4, and Ch-5. Each of the channel packages G-1, G-2, G-3 includes three channels. Therefore, after sorting, the channel packages G-1, G-2, and G-3 could be in any order. For example, the channel packages are in an order of G-2, G-3, and G-1.

Each of the users in the first group S subscribing to the channel package G-2 is assigned to a first temporary group S1. Each of the users in the first group S subscribing to the channel package G-3 but having not been assigned to the temporary group S1 is assigned to a second temporary group S2. Each of the users in the first group S subscribing to the channel package G-1 but having not been assigned to the temporary groups S1 and S2 is assigned to a third temporary group S3. In other words, each of the users in the first group S is assigned to one of the temporary groups S1, S2, and S3. As a result, the temporary group S1 includes nine users U2, U3, U4, U6, U18, U19, U28, U30, and U32; the temporary group S2 includes six users U9, U12, U16, U24, U25, and U29; and the temporary group S3 includes two users U5 and U22. The users in each of the temporary groups S1, S2, and S3 are further assigned to one or more user groups.

For example, the temporary group S1 includes nine users U2, U3, U4, U6, U18, U19, U28, U30, and U32. As noted above, if the number of the users in the first temporary group S1 is larger than the maximum allowable user number C (Fig. 5B, step 522 - Yes), a process is conducted to identify ones of the users in the temporary group S1 (step 530). Here, in the illustrated embodiment, the maximum allowable user number in a user group is eight. The number of the users in the temporary group S1 is larger than the maximum allowable user number in a user group. Therefore, a process is conducted to identify ones of the users in the temporary group S1 (step 530).

For each one of the receiver groups Ch-1, Ch-2, ..., Ch-8, G-1, and G-3, the number of the users in the temporary group S1 that also subscribe to that one of the receiver groups is calculated. A largest one among the calculated numbers is three, which corresponds to the channel package G-3, and is smaller than the maximum allowable user number eight. Therefore the users U18, U30, U32 in the temporary group S1 that also subscribe to the channel package G-3 are identified (step 530). Because there is no existing user group (step 532 - No), the users U18, U30, U32 are assigned to a first new user group UG-1 602 (step 536), and are removed from the temporary group S1 (step 538). The user group UG-1 602 becomes an existing user group.

Since all the users in the temporary group S1 have not been assigned (step 540 - No), step 530 is repeated. For example, the users U3 and U28 are identified (step 530), assigned to the existing user group UG-1 602 (step 532 - Yes and step 534), and removed from the temporary group S1 (step 538), followed by the users U6, U2, and U4. When the user U19 is to be assigned, the user group UG-1 602 is full (step 532 - No), therefore the user U19 is assigned to a new user group UG-2 604 (step 536). The user group UG-2 604 thereby becomes an existing user group. Therefore, referring to Fig. 6A, the users U18, U30, U32, U3, U28, U6, U2, and U4 are assigned to the first user group UG-1 602, and the user U19 is assigned to the second user group UG-2 604.

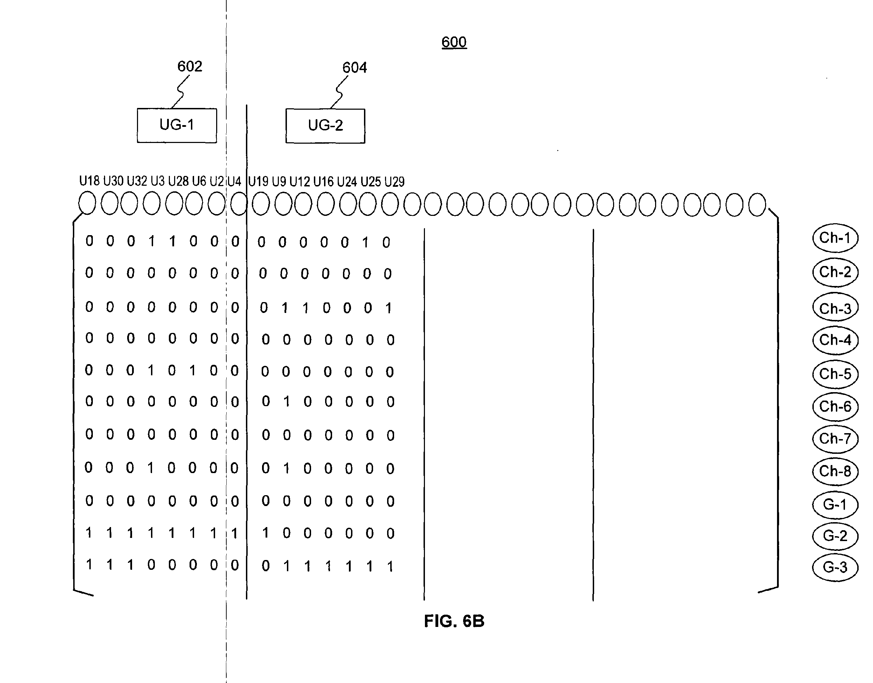

Also for example, the temporary group S2 includes six users U9, U12, U16, U24, U25, and U29. The number of users in the temporary group S2 is smaller than the maximum allowable user number (Fig. 5B, step 522 - No). Therefore, it is judged whether one of the existing user groups has enough available spaces for the users in the temporary group S2 (Fig. 5B, step 524). In the illustrated embodiment, the second user group UG-2 604 has one space assigned to the user U32 from the temporary group S1, and still has seven available spaces. As a result, referring to Fig. 6B, the six users in the temporary group S2 are assigned to the user group UG-2 604 (Fig. 5B, step 526).

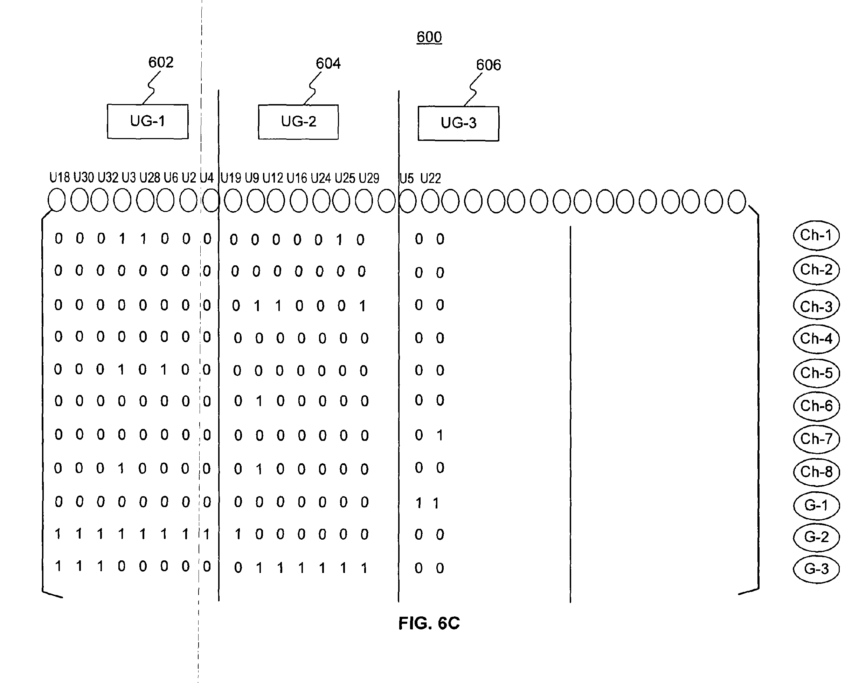

Further for example, the temporary group S3 includes two users U5 and U22. The number of users in the temporary group S3 is smaller than the maximum allowable user number (Fig. 5B, step 522 - No). Therefore, it is judged whether one of the existing user groups has enough available spaces for the users in the temporary group S3 (Fig. 5B, step 524). In the illustrated embodiment, the first user group UG-1 602 is already full, and the second user group UG-2 604 has only one available space. As a result, referring to Fig. 6C, the users U5 and U22 in the temporary group S3 are assigned to a new user group UG-3 606 (Fig. 5B, step 528). The user group UG-3 606 becomes an existing user group.

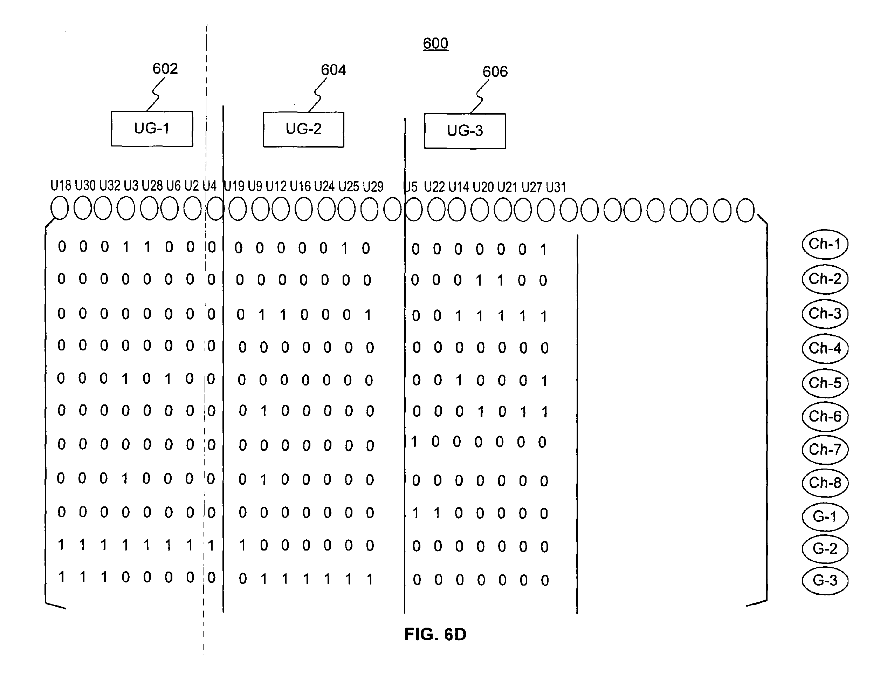

The users in the first group S have been assigned to the user groups UG-1 602, UG-2 604, and UG-3 606 (Fig. 5A, step 506). Then, in accordance with step 508 in Fig. 5A, the users in the second group T are assigned to user groups. For example, the users in the second group T are divided in temporary groups Ti. In the illustrated embodiment, the temporary group T1 includes five users U14, U20, U21, U27, U31. Therefore, it is judged whether one of the existing user groups has enough available spaces for the users in the temporary group T1. Here, the third user group UG-3 606 has two spaces assigned to the users U5 and U22, and still has six available spaces. As a result, referring to Fig. 6D, the five users in the temporary group T1 are assigned to the user group UG-3 606.

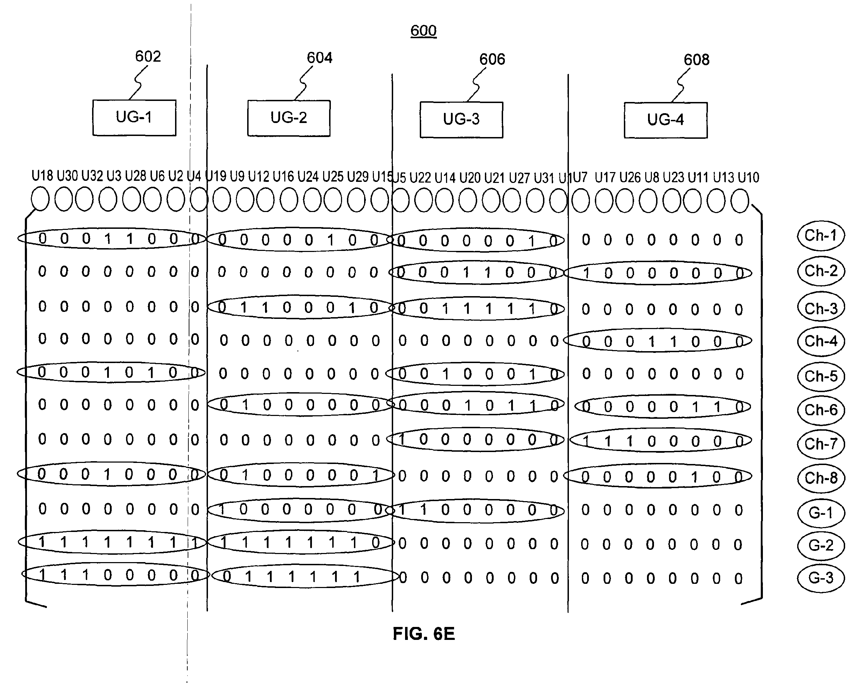

Similar to the description above, the users in the temporary groups Ti are assigned to user groups. As a result, referring to Fig. 6E, the users in the second group T are assigned to the user groups UG-2 604 or UG-3 606, or a user group UG-4 608. In other words, each of the thirty-two users Ui (i = 1, 2, ..., 32) is assigned to one of the user groups UG-1 602, UG-2 604, UG-3 606, and UG-4 608.

For each one of the receiver groups, the broadcasting system 402 broadcasts an EMM2 message to each one of the user groups UG-1 602, UG-2 604, UG-3 606, UG-4 608 that subscribes to the one of the receiver groups, to update the RGK corresponding to the one of the receiver groups. For example, for the channel Ch-1, the broadcasting system 402 broadcasts an EMM2 message to each of the user groups UG-1 602, UG-2 604, and UG-3 606. Also for example, for the channel package G-1, the broadcasting system 402 broadcasts an EMM2 message to each of the user groups UG-2 604 and UG-3 606. As a result, in the illustrated embodiment, the broadcasting system 402 broadcasts a total of twenty-four EMM2 messages corresponding to the twenty-four large circles in Fig. 6E, respectively. Compared to the conventional broadcast encryption method in Fig. 3, where a total of twenty-eight EMM2 messages are broadcasted, the disclosed user group assignment method further reduces the number of EMM2 messages by about 15%. Accordingly, broadcasting efficiency may be improved, and broadcasting overhead may be reduced.

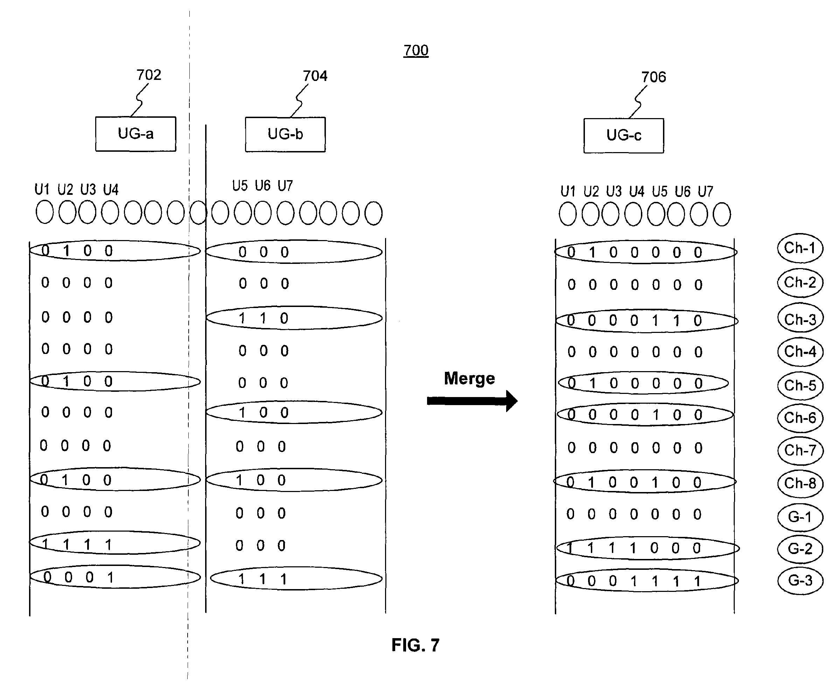

As noted above, when ones of the user groups are small, that is, when the number of users in each of the ones of the user groups is not larger than a prescribed value, e.g., 50% of the maximum allowable user number C in a user group, the broadcasting system 402 may enter the merger phase 410 (Fig. 4). Fig. 7 illustrates an exemplary user group merger method 700, according to an exemplary embodiment.

For convenience of illustration, it is assumed the maximum allowable user number in a user group is eight. Referring to Fig. 7, before merger, a first user group UG-a 702 has four users U1, U2, U3, and U4, and a second user group UG-b 704 has three users U5, U6, and U7. For each one of the receiver groups, the broadcasting system 402 broadcasts an EMM2 message to each one of the user groups UG-a 702 and UG-b 704 that subscribes to the one of the receiver groups. For example, for the channel Ch-1, the broadcasting system 402 broadcasts an EMM2 message to each of the user groups UG-a 702 and UG-b 704. Also for example, for the channel package G-2, the broadcasting system 402 broadcasts an EMM2 message to the user group UG-a 702. As a result, the broadcasting system 402 broadcasts, for the user groups UG-a 702 and UG-b 704, a total of ten EMM2 messages corresponding to the ten large circles in Fig. 7, respectively, before merger.

In the merger phase 410 (Fig. 4), the broadcasting system 402 merges the user groups UG-a 702 and UG-b 704 to form a merged user group UG-c 706 including the users U1, U2, ... , U7. Therefore, the broadcasting system 402 broadcasts, for the user group UG-c 706, a total of seven EMM2 messages corresponding to the seven large circles in Fig. 7 after merger. Compared to the user group assignment before merger, the number of broadcasted EMM2 messages is reduced by, in the illustrated embodiment, about 30% for the same users U1, U2, ..., U7. Accordingly, broadcasting overhead is reduced.

Other embodiments of the invention will be apparent to those skilled in the art from consideration of the specification and practice of the invention disclosed herein. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for assigning a plurality of users of a broadcasting system, wherein each of the plurality of users subscribes to at least one of a plurality of receiver groups provided by the broadcasting system, the method comprising:
dividing the plurality of users into a plurality of temporary groups each including ones of the plurality of users that subscribe to a same one of the plurality of receiver groups; and
assigning the ones of the plurality of users to at least one user group.

2. The method of claim 1, the system including a plurality of user groups,
wherein each of the plurality of users is assigned to only one of the plurality of user groups;
the method further comprising any one, two or all three of the following steps (a), (b) and (c):
(a) assigning a new user to one of the plurality of user groups, the new user and previously assigned users in the one of the plurality of user groups subscribing to the same one of the receiver groups;
(b) when one of the plurality of users un-subscribes from one of the receiver groups, reserving a space in the user group where the one of the plurality of users was assigned, and assigning the one of the plurality of users to the user group if the one of the plurality of users re-subscribes to the one of the receiver groups;
(c) when the maximum allowable user number has been set for each of the plurality of user groups, merging first and second ones of the plurality of user groups, a total number of the users in the first user group and the users in the second user group being not larger than the maximum allowable user number.

3. The method of claim 2, wherein one of the users in the first user group and one of the users in the second user group subscribe to the same one of the receiver groups.

4. A method for assigning a plurality of users of a broadcasting system, wherein each of the plurality of users subscribes to at least one of a plurality of channels or one of a plurality of channel packages each including ones of the plurality of channels, the method comprising:
dividing the plurality of users into a plurality of temporary groups, each of the plurality of temporary groups including ones of the plurality of users that subscribe to a same one of the plurality of channels or a same one of the plurality of channel packages; and
the ones of the plurality of users to at least one user group.

5. The method of claim 4, wherein the dividing comprises dividing the plurality of users into first and second groups, the first group including ones of the plurality of users each subscribing to at least one of the plurality of channel packages, the second group including remaining ones of the plurality of users;
said method preferably also comprising:
assigning the users in the first group to ones of the temporary groups each corresponding to one of the plurality of channel packages; and
assigning the users in the second group to ones of the temporary groups each corresponding to one of the plurality of channels;
and/or said method preferably also comprising sorting the plurality of channel packages, a first one of the sorted channel packages having a largest number of channels and a last one of the sorted channel packages having a smallest number of channels;
and/or wherein ones of the users in the first group are assigned to one of the temporary groups corresponding to one of the channel packages, starting from the first one of the sorted channel packages.

6. The method of any one of the preceding claims, further comprising setting a maximum allowable user number for the at least one user group.

7. The method of claim 6, wherein the assigning comprises:
judging whether a number of the ones of the plurality of users is larger than the maximum allowable user number;
said method also preferably comprising:
judging that the number of the ones of the plurality of users is not larger than the maximum allowable user number, and an existing user group has been formed to include users in one or more of the temporary groups, the assigning further comprising:
judging whether the existing user group has enough available places for the ones of the plurality of users;
assigning the ones of the plurality of users to the existing user group if the existing user group has enough available spaces; and
assigning the ones of the plurality of users to a new user group if the existing user group does not have enough available spaces; and/or said method also preferably comprising:
judging that the number of the ones of the plurality of users is larger than the maximum allowable user number, and an existing user group has been formed to include users in one or more of the temporary groups, the assigning further comprising:
identifying users from the ones of the plurality of users;
judging whether the existing user group has enough available paces for the identified users;
assigning the identified users to the existing user group if the existing user group has enough available spaces; and
assigning the identified users to a new user group if the existing user group does not have enough available spaces.

8. The method of any one of the preceding claims, further comprising broadcasting an entitlement management message (EMM) including a receiver group key (RGK) to the ones of the plurality of users.

9. A method for adding a new user to a plurality of users of a broadcasting system, wherein each of the plurality of users subscribes to at least one of a plurality of channels or one of a plurality of channel packages each including ones of the plurality of channels, and each of the plurality of users is assigned to one of a plurality of user groups, the method comprising:
assigning the new user to one of the plurality of user groups, the new user and at least one previously assigned user in the one of the plurality of user groups subscribing to the same one of the plurality of channels and channel packages.

10. A method for removing a first user from a plurality of users of a broadcasting system, wherein each of the plurality of users subscribes to at least one of a plurality of channels or one of a plurality of channel packages each including ones of the plurality of channels, and each of the plurality of users is assigned to one of a plurality of user groups, the method comprising:
reserving, when the first user un-subscribes from one of the plurality of channels and channel packages, a space in the user group where the first user was assigned, and assigning the first user to the user group if the first user re-subscribes to the one of the plurality of channels and channel packages.

11. A method for managing a plurality of user groups of a broadcasting system, wherein each of the plurality of user groups includes a plurality of users subscribing to at least one of a plurality of channels or one of a plurality of channel packages each including ones of the plurality of channels, and each of the plurality of users is assigned to one of the plurality of user groups, the method comprising:
merging first and second ones of the plurality of user groups, wherein a total number of the users in the first user group and the users in the second user group is not larger than a maximum allowable user number.

12. The method of claim 11, wherein one of the users in the first user group and one of the users in the second user group subscribe to the same one of the plurality of channels and channel packages.

13. A broadcasting system for providing a plurality of receiver groups to a plurality of users, the system being configured to:
divide the plurality of users into a plurality of temporary groups each including ones of the plurality of users that subscribe to a same one of the receiver groups; and
assign the ones of the plurality of users to at least one user group.

14. The system of claim 13, being further configured to:
assign each of the plurality of users to only one of a plurality of user groups; and being configured to perform any one, two or all three of the following steps (a), (b) and (c):
(a) assign a new user to one of the plurality of user groups, the new user and previously assigned users in the one of the plurality of user groups subscribing to the same one of the receiver groups;
(b) reserve, when one of the plurality of users un-subscribes from one of the receiver groups, a space in the user group where the one of the plurality of users was assigned; and assign the one of the plurality of users to the user group if the one of the plurality of users re-subscribes to the one of the receiver groups;
(c) set the maximum allowable user number for each of the plurality of user groups; and merge first and second ones of the plurality of user groups, a total number of the users in the first user group and the users in the second user group being not larger than the maximum allowable user number.

15. The system of claim 13 or 14, being further configured to set a maximum allowable user number for the at least one user group.

16. The system of claim 13, 14 or 15, being further configured to broadcast an entitlement management message (EMM) including a receiver group key (RGK) to the ones of the plurality of users.

17. The system of claim 13, 14, 15 or 16, wherein the system is a digital broadcasting system for broadcasting digital media and/or the system is a pay-TV system.
